Europäisches Patentamt

European Patent Office

Office européen des brevets

(11) Publication number: **0 288 370 B1**

# EUROPEAN PATENT SPECIFICATION

(45) Date of publication of patent specification: **19.08.92** (51) Int. Cl.⁵: **B62K  25/00**, B60B 37/10

(21) Application number: **88400938.2**

(22) Date of filing: **18.04.88**

(54) **Rear wheel holding mechanism for a motorcycle.**

(30) Priority: **21.04.87 JP 99455/87**

(43) Date of publication of application:
**26.10.88 Bulletin  88/43**

(45) Publication of the grant of the patent:
**19.08.92 Bulletin  92/34**

(84) Designated Contracting States:
**DE FR IT**

(56) References cited:
**EP-A- 0 104 108**
**US-A- 4 655 311**

(73) Proprietor: **HONDA GIKEN KOGYO KABUSHIKI KAISHA**
**1-1, 2-chome Minami-Aoyama**
**Minato-ku Tokyo(JP)**

(72) Inventor: **Ishikawa, Yoshimi**
**3-7-15, Narimasu Itabashi-ku**
**Tokyo(JP)**

(74) Representative: **Mongrédien, André et al**
**c/o SOCIETE DE PROTECTION DES INVEN-**
**TIONS 25, rue de Ponthieu**
**F-75008 Paris(FR)**

## Description

The present invention relates to a rear wheel holding mechanism of a center bolt type for a motorcycle having a rear wheel suspension of a cantilever swing arm type and, more specifically, to a rear wheel holding mechanism facilitating the mounting of a rear wheel to the rear wheel suspension of a motorcycle.

The document JP-A-59-77911 discloses a rear wheel mounting mechanism for mounting a rear wheel on a cantilever swing arm. This rear wheel mounting mechanism has a rear axle having a flange provided with a plurality of stud bolts, and a rear wheel is fastened to the flange of the rear axle by screwing nuts on the stud bolts.

In such a rear wheel mounting mechanism having a plurality of stud bolts, fastening a plurality of nuts in mounting the rear wheel on the rear axle, and unfastening these nuts in removing the rear wheel from the axle requires work.

The document JP-A-61-129386 discloses a rear wheel mounting mechanism of a so-called center bolt type, in which an axle having one end provided with an external thread extends coaxially through the hub of a rear wheel and a single axle nut is screwed on the threaded end of the rear axle to fasten the rear wheel to the rear axle.

In such a rear wheel mounting mechanism of a center bolt type, a single nut must be fastened or unfastened for mounting the rear wheel on the rear axle or for removing the rear wheel.

However, the rear axle of this rear wheel mounting mechanism must have a relatively large diameter, because it transmits the power to the rear wheel. Thus, the outside diameter of the external thread provided on the rear axle is inevitably large, and hence a large torque needs to be applied to the axle nut in fastening the rear wheel to the rear axle.

Consequently, the known rear wheel mounting mechanisms require further improvements to improve working facility in replacing the rear wheel and in carrying out maintenance work. For a racing motorcycle, in particular, the improvement of the working facility is a significant subject.

Accordingly, it is an object of the present invention to provide a rear wheel holding mechanism of a center bolt type capable of fastening a rear wheel to a rear axle by screwing an axle nut on the rear axle by a comparatively small torque to improve the working facility, without reducing the efficiency of the power transmission.

To solve the foregoing problems, the present invention provides a rear wheel holding mechanism for a motorcycle, comprising a swing arm having a front end pivotally joined to a main frame of the motorcycle, and a rear end supporting a driving shaft to which is attached a power transmitting member, said shaft having an end coaxially inserted through the hub of a rear wheel and provided with an externally threaded portion which projects from said hub, an axle nut being screwed on said threaded portion to fasten the rear wheel to the driving shaft,

characterized in that said driving shaft comprises a hollow outer shaft and an inner shaft having a diameter smaller than that of the outer shaft and inserted in the outer shaft, the power transmitting member being attached to the outer shaft and the externally threaded portion being formed on the inner shaft.

Thanks to these characteristics, the driving power is transmitted to the outer shaft having a larger diameter and hence a large torque can be transmitted to the rear wheel. However, the rear wheel is fastened to the driving shaft by screwing the axle nut to the threaded portion of the inner shaft by a comparatively small torque.

In a preferred embodiment of the invention, the outer shaft extends through the rear end of the swing arm and the power transmitting member is attached to the end of the outer shaft projecting from the swing arm, on the side opposite to the rear wheel. Furthermore, the outer shaft is rotatably supported in the swing arm by at least two bearings and the inner shaft is fastened to a circular inner flange formed in the outer shaft, at a position near the bearing which is remote from the rear wheel relative to the other bearing.

Preferably, the hub of the rear wheel is fastened between a flange of the outer shaft and a spacer located between the hub and the axle nut.

In a first embodiment of the invention, the spacer has a taper end which engages an inner taper surface of the hub, and slits are formed in the taper end to increase the coupling strength between the outer shaft and the hub of the rear wheel.

According to a second embodiment of the invention, both contact surfaces between the spacer and the hub and between the flange and the hub are perpendicular to the axis of the driving shaft, and the contact surface between the hub and the flange is provided at the outside of the circular peripheral edge of a central recess formed in the hub of the rear wheel. Therefore, the coupling force between the shaft and the hub is increased.

The invention is described in greater detail hereinafter, by way of non-limitative examples, with reference to the accompanying drawings, in which :

Figure 1 is a side elevation of a rear wheel holding mechanism, in a first embodiment, according to the present invention ;

Figure 2 is a longitudinal sectional view along line II-II of Figure 1 ;

Figure 3 is an exploded perspective view of an essential portion of the rear wheel holding mechanism of Figure 1 ;

Figure 4 is a longitudinal sectional view of an essential portion of the rear wheel holding mechanism of Figure 1 ; and

Figure 5 is a longitudinal sectional view similar to Figure 4, illustrating a second embodiment of the invention.

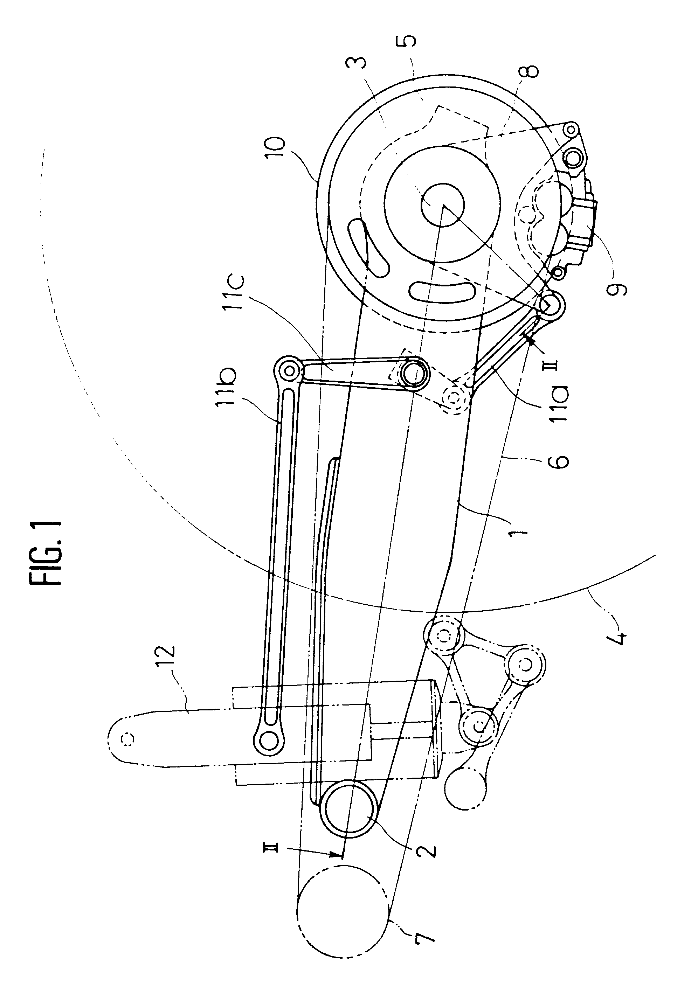

Figures 1 through 4 illustrate a rear wheel holding mechanism for a motorcycle, in a first embodiment, according to the present invention.

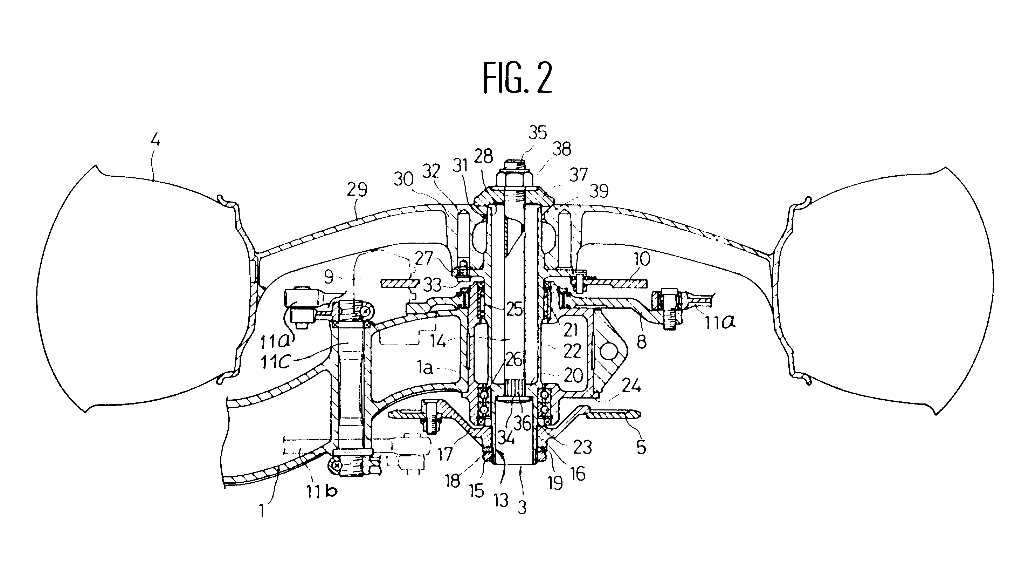

Referring to Figures 1 and 2, the rear wheel holding mechanism comprises a cantilever swing arm 1. The swing arm 1 has a joining part 2 at the front end thereof, by which the arm is joined pivotally to the main frame (not shown) of the motorcycle. A rear wheel 4 is held in a cantilever fashion at the rear end of the swing arm 1, by means of a driving axle 3.

A driven sprocket 5 is secured to the driving axle 3, for rotation together with the latter. The driven sprocket 5 is driven rotatively by a driving sprocket 7 fixed to the output shaft of an engine (not shown) through a chain 6. A caliper bracket 8 is mounted for free turning movement on the driving axle 3, and a brake caliper 9 is attached to the caliper bracket 8. The caliper 9 straddles a brake disk 10 secured to the driving axle 3, in order to brake the disk upon actuation of the brake. The caliper bracket 8 is connected to the main frame (not shown) of the motorcycle by means of links 11a and 11b and a bell crank 11c pivotably mounted in the swing arm 1, so that the caliper 9 is positioned at a fixed position relative to the brake disk 10 regardless of the positional adjustment of the driving axle 3. A shock absorber 12 of a known construction is provided between the main frame (not shown) of the motorcycle and the swing arm 1.

According to the invention, the driving axle 3 comprises a hollow outer shaft 13 and a hollow inner shaft 14 having an outside diameter smaller than that of the outer shaft 13. The inner shaft 14 is inserted coaxially in the outer shaft 13 to form the driving axle 3 in a double-shaft construction.

The outer circumference of one end of the outer shaft 13 is threaded to form a threaded portion 15, and a portion behind the threaded portion 15 is serrated to form a serrated portion 16. The sprocket hub 17 of the driven sprocket 5 is fitted on the serrated portion 16 and fastened to the outer shaft 13 by screwing a nut 18 on the threaded portion 15, a washer 19 being inserted between the sprocket hub 17 and the nut 18.

Stepped sections 21, 22 and 23 having diameters decreasing in that order towards the serrated portion 16 are formed in the middle portion of the outer shaft 13. The outer shaft 13 is journaled at the middle portion thereof on a known eccentric unit 24 with the stepped section 21 supported in a needle bearing 25 and the stepped section 23 supported in ball bearings 26. Since the diameter of the outer shaft 13 is thus stepped down toward its end carrying the driven sprocket 5, the outer shaft 13 can easily be passed through the needle bearing 25 and the ball bearings 26 fitted in the eccentric unit 24. The eccentric unit 24 is held in a split fastening 1a formed at the rear end of the swing arm 1 by tightening the split fastening 1a with a bolt (not shown). The split fastening 1a is loosened by unfastening the bolt to enable the eccentric unit 24 to turn therein for adjusting the tension of the chain 6 by changing the position of the driving axle 3 relative to the driving sprocket 7.

A flange 27 is formed integrally with the outer shaft 13 at a position near the other end 28, namely the wheel holding end, of the outer shaft 13. The end 28 of the outer shaft 13 is fitted in a through hole 31 formed in the central portion of a hub 30 of the rear wheel 4. Spokes 29 extend radially from the hub 30. Bores 32 are formed in the hub 30 on a circle centered on the axis of the hub. Pins 33 fastened to the flange 27 are received respectively in the bores 32 to restrain the hub 30 from rotary movement relative to the flange 27.

The inner shaft 14 is a comparatively long hollow shaft. The inner shaft 14 has, at one end thereof, a head 34 engaging an inner flange 20 formed integrally with the outer shaft 13, at a position near the ball bearings 26. The inner shaft is passed through a central through hole of the flange 20, and the other end thereof projects outside from the end 28 of the outer shaft 13. A splined portion 36 is formed in the neck near the head 34 of the inner shaft 14, so that the inner shaft 14 is splined to the inner flange 20 of the outer shaft 13 for rotation together with the outer shaft 13. An externally threaded portion 35 is formed on the other end of the inner shaft 14. An axle nut 38 is screwed on the threaded portion 35 to fasten the inner shaft 14, the hub 30 and the outer shaft 13 together, a spacer 37 being inserted between the nut 38 and the hub 30.

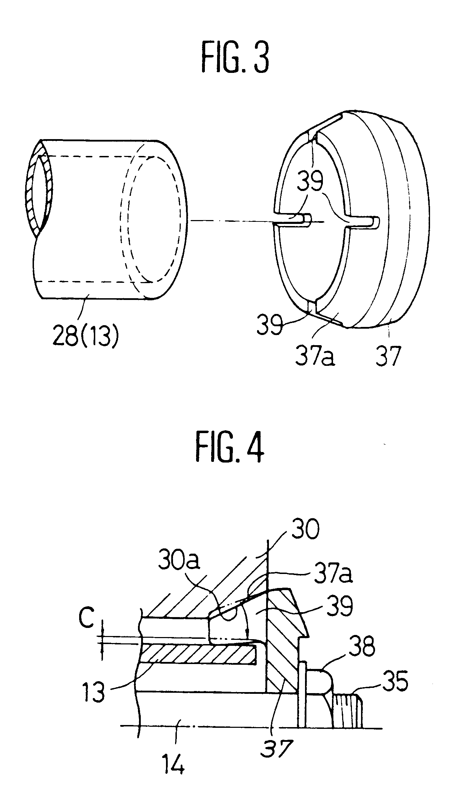

As shown in Figure 3, an external taper surface 37a is formed on the end of the spacer 37 adjacent to the hub 30, to be brought into contact with the latter. A plurality of slits 39 are formed in the taper end of the spacer 37, at regular angular intervals.

The brake disk 10 is bolted to the flange 27, and the caliper bracket 8 is fitted on a boss of the eccentric unit 24.

The manner of mounting the rear wheel 4 on the rear wheel holding mechanism will be described hereinafter.

The rear wheel 4 is mounted on the outer shaft 13 with the through hole 31 of the hub 30 receiving the end 28 of the outer shaft 13 therethrough. Then, the spacer 37 is mounted on the end 28 of the outer shaft 13 and the hub 30 is fastened to the outer shaft 13 by screwing the axle nut 38 on the threaded portion 35 of the inner shaft 14. Thus, as shown in Figure 4, the taper surface 37a of the spacer 37 and an internal taper surface 30a of the hub 30 engage firmly as the spacer 37 is driven axially by the axle nut 38. Since slits 39 are formed in the taper end having the taper surface 37a, this taper end is subject to elastic deformation, and hence the taper end of the spacer 37 is squeezed and pressed firmly on the end 28 of the outer shaft, to fasten the hub 30 firmly to the outer shaft 13. In this embodiment, if the slits 39 were not formed in the taper end of the spacer 37, a clearance C could exist between the inner circumference of the taper end of the spacer 37 and the outer shaft 13, due to insufficient elastic deformation of the taper end of the spacer 37, thereby reducing the coupling strength between the outer shaft 13 and the hub 30. Since the axle nut 38 is screwed on the threaded portion 35 of the inner shaft 14 having a comparatively small outside diameter, the axle nut 38 can be fastened by a comparatively small torque.

Then, the narrow end (the stepped portion 23) of the outer shaft 13 is inserted in the bearing holding part of the eccentric unit 24, the sprocket hub 17 is fitted the serrated portion 16 of the outer shaft 13, and the nut 18 is screwed on the threaded portion 15 of the outer shaft 13, to mount the driving axle 3 carrying the rear wheel 4 on the swing arm 1.

In the rear wheel holding mechanism thus constructed, power is transmitted through the driven sprocket 5 and the driving shaft 3 to the hub 30 of the rear wheel. Since the power is transmitted to the hub 30 through the outer shaft 13 having a comparatively large outside diameter, the rear wheel holding mechanism has an increased torque transmitting capacity.

Since the inner shaft 14 has a comparatively small outside diameter and a comparatively large length, the inner shaft 14 is subject to torsion when the axle nut 38 is screwed thereon, and the torsional reaction of the inner shaft 14 prevents the axle nut 38 from loosening. Therefore, the thread of the threaded portion 35 need not be a reverse thread.

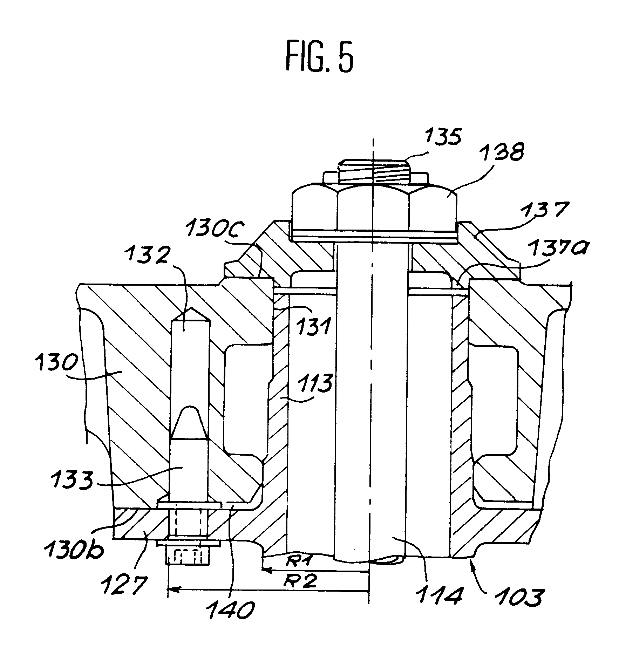

A second embodiment of the invention will be now described with reference to figure 5, which shows the end of the driving axle carrying the rear wheel and the part of the hub of the latter mounted on the driving axle. On figure 5, the parts of the rear wheel holding mechanism corresponding to parts of the embodiment previously described with reference to figures 1 to 4 have the same reference numerals, increased by 100.

As in the first embodiment, the driving axle 103 of the rear wheel holding mechanism of figure 5 comprises a hollow outer shaft 113 and a hollow inner shaft 114 inserted coaxially within the outer shaft 113. The end of the outer shaft 113 is fitted in a center through hole 131 formed in the central portion of the hub 130 of the rear wheel, in such a way that the inner radial surface 130b of the hub 130 is applied against a flange 127 formed integrally with the outer shaft 113. Pins 133 are fastened to the flange 127 and received in bores 132 formed in the hub 130 and opening in the inner surface 130b.

Furthermore, a nut 138 screwed on externally threaded portion 135 provided at the end of the inner shaft 114 applies a spacer 137 against the outer radial surface 130c of the hub 130.

More precisely, the contact surface between the spacer 137 and the radial surface 130c of the hub is perpendicular to the axis of the driving axle 103. A boss 137a formed on the inner surface of the spacer 137 fits the center hole 131 of the hub.

A central recess 140 having a circular peripheral edge of radius R2 is formed in the inner radial surface 130b of the hub, in such a way that the inner surface 130b of the hub and the axles flange 127 are in contact with each other, in a plane perpendicular to the axis of the rear axle 5, only at the outside of the peripheral edge of the recess 140.

When the rear wheel is mounted on the driving axle 103, friction acting on the outer and inner surfaces 130c, 130b of the hub 130 acts as a coupling force for coupling the rear wheel and the driving axle.

While the motorcycle is running along a curve, the rear wheel tends to deflect laterally relative to the longitudinal center line of the main frame of the motorcycle and thereby a force acts on each surface 130b, 130c in a direction oblique with respect to the axis of the driving axle 103. Since contact surface between the spacer 137 and the outer surface 130c of the hub 130 is located in a plane perpendicular to the axis of the driving axle 103, most part of the force acts substantially perpendicularly to this contact surface, and hence the coupling force during the running of the motorcycle along a curve is not very different from the coupling force during the straight running of the motorcycle.

The radius R2 of the inner circumference of the contact surface between the inner surface 130b of the hub 130 and the axle flange 127 is far greater than the radius R1 of the same when the recess 140 is not formed in the inner surface 130b of the hub 130. Therefore, the pressure acting on the contact surfaces increases accordingly, so that the inner surface 130b of the hub 130 is fastened to the axle flange 127 by a large coupling force.

In both embodiments of the invention, the rear wheel holding mechanism has a driving axle of a double-shaft construction consisting of an outer shaft having a comparatively large outside diameter and an inner shaft having a comparatively small outside diameter. Thanks to this construction, power is transmitted efficiently to the rear wheel through the outer shaft having a comparatively large outside diameter. Furthermore, the rear wheel can be fastened to the driving axle by screwing a comparatively small axle nut on the threaded portion of the inner shaft having a comparatively small outside diameter, by a comparatively small torque. Thus, the efficiency of the rear wheel mounting work can be improved accordingly.

## Claims

1. A rear wheel holding mechanism for a motorcycle, comprising a swing arm (1) having a front end pivotally joined to a main frame of the motorcycle, and a rear end supporting a driving shaft (3, 103) to which is attached a power transmitting member (5), said shaft having an end (28) coaxially inserted through the hub (30, 130) of a rear wheel (4) and provided with an externally threaded portion (35, 135) which projects from said hub, an axle nut (38, 138) being screwed on said threaded portion to fasten the rear wheel to the driving shaft,

   characterized in that said driving shaft (3, 103) comprises a hollow outer shaft (13, 113) and an inner shaft (14, 114) having a diameter smaller than that of the outer shaft and inserted in the outer shaft, the power transmitting member (5) being attached to the outer shaft (13, 113), and the externally threaded portion (35, 135) being formed on the inner shaft (14, 114).

2. A rear wheel holding mechanism according to claim 1, characterized in that said outer shaft (13, 113) extends through the rear end of said swing arm (1), said power transmitting member (5) being attached to one end of the outer shaft projecting from the rear end of said swing arm, on a side opposite to the rear wheel (4).

3. A rear wheel holding mechanism according to either claim 1 or 2, characterized in that said outer shaft (13, 113) is rotatably supported by bearings (25, 26) in said swing arm (1) a circular inner flange (20) being formed in said outer shaft at a position near one (26) of said bearings remote from the rear wheel relative to the other bearing (25), and said inner shaft (14, 114) being fastened to the circular inner flange (20).

4. A rear wheel holding mechanism according to anyone of claims 1 to 3, characterized in that the diameter of said outer shaft (13, 113) increases from one end carrying the power transmitting member (5) towards the other end (28) carrying the rear wheel (4), the hub (30, 130) of the rear wheel being fitted on said other end of the outer shaft.

5. A rear wheel holding mechanism according to anyone of claims 1 to 4, characterized in that said outer shaft (13, 113) has a flange (27, 127) engaging the hub (30, 130) of the rear wheel, a spacer (37, 137) being provided between the hub of the rear wheel and the axle nut, for applying a fastening force of said axle nut (38, 138) to the hub of the rear wheel.

6. A rear wheel holding mechanism according to claim 5, characterized in that pins (33, 133) are fastened to said flange (27, 127) and received in bores (32, 132) formed in the hub (30, 130).

7. A rear wheel holding mechanism according to either claim 5 or 6, characterized in that a contact surface between said spacer (24) and the hub (130) of the rear wheel is perpendicular to the axis of the driving shaft (103).

8. A rear wheel holding mechanism according to claim 7, characterized in that a central recess (140) is formed on the side of the hub (30, 130) adjacent to the flange (27, 127), a contact surface between said flange and said hub extending perpendicular to the axis of the driving shaft (103), at the outside of a circular peripheral edge of said central recess (140).

9. A rear wheel holding mechanism according to either claim 5 or 6, characterized in that the spacer (37) has a taper end provided with an external taper surface (37a) adapted to engage an internal taper surface (30a) of the hub, and slits (39) are formed in said taper end.

## Patentansprüche

1. Motorradhinterradstützeinrichtung mit einem Schwingarm (1), der mit einem vorderen Ende schwenkbar mit einem Hauptrahmen des Motorrades verbunden ist und mit einem hinteren Ende einer Antriebswelle (3, 103) trägt, die an einem Kraftübertragungselement (5) befestigt ist, von der ein Ende (28) koaxial in die Nabe (30, 130) eines Hinterrades (4) eingesetzt ist und mit einem aus der Nabe herausragenden ein Außengewinde aufweisenden Teil (35, 135) versehen ist, und mit einer auf den mit Gewinde versehenen Teil aufgeschraubten Wellenmutter (38, 138) zur Befestigung des Hinterrades an der Antriebswelle, **dadurch gekennzeichnet,** daß die Antriebswelle (3, 103) eine hohle Außenwelle (13, 113) und eine Innenwelle (14, 114) umfaßt, deren Durchmesser kleiner als der der Außenwelle ist und die in die Außenwelle eingesetzt ist, daß das Kraftübertragungselement (5) an der Außenwelle (13, 113) befestigt ist und daß der mit Außengewinde versehene Teil (35, 135) auf der Innenwelle (14, 114) ausgebildet ist.

2. Hinterradstützmechanismus nach Anspruch 1, **dadurch gekennzeichnet,** daß sich die Außenwelle (13, 113) durch das hintere Ende des Schwingarms (1) erstreckt und daß das Kraftübertragungselement (5) auf einer dem Hinterrad (4) abgewandten Seite an einem Ende der aus dem hinteren Ende des Schwingarms herausragenden Außenwelle befestigt ist.

3. Hinterradstützeinrichtung nach Anspruch 1 oder 2, **dadurch gekennzeichnet,** daß die Außenwelle (13, 113) durch Lager (25, 26) im Schwingarm (1) drehbar gelagert ist, daß in der Außenwelle an einer stelle im Bereich eines (26) der Lager, die relativ zum anderen Lager (25) vom Hinterrad entfernt liegt, ein kreisförmiger Innenflansch (20) ausgebildet ist, und daß die Innenwelle (14, 114) am ringförmigen Innenflansch (20) befestigt ist.

4. Hinterradstützeinrichtung nach den Ansprüchen 1 bis 3, **dadurch gekennzeichnet,** daß der Durchmesser der Außenwelle (13, 113) von einem das Kraftübertragungselement (5) tragenden Ende zum anderen das Hinterrad (4) tragenden Ende (28) zunimmt und daß die Nabe (30, 130) des Hinterrades auf das andere Ende der Außenwelle aufgepaßt ist.

5. Hinterradstützeinrichtung nach den Ansprüchen 1 bis 4, **dadurch gekennzeichnet,** daß die Außenwelle (13, 113) einen mit der Nabe (30, 130) des Hinterrades in Wirkverbindung stehenden Flansch (27, 127) aufweist und daß zwischen der Nabe des Hinterrades und der Wellenmutter ein Abstandshalter (37, 137) zur Aufprägung einer Befestigungskraft von der Wellenmutter (38, 138) auf die Nabe des Hinterrades vorgesehen ist.

6. Hinterradstützeinrichtung nach Anspruch 5, **dadurch gekennzeichnet,** daß am Flansch (27, 127) Stifte (33, 133) befestigt und von Bohrungen (32, 132) in der Nabe (30, 130) aufgenommen sind.

7. Hinterradstützeinrichtung nach Anspruch 5 oder 6, **dadurch gekennzeichnet,** daß eine Kontaktfläche zwischen dem Abstandshalter (24) und der Nabe (130) des Hinterrades senkrecht auf der Achse der Antriebswelle (103) steht.

8. Hinterradstützeinrichtung nach Anspruch 7, **dadurch gekennzeichnet,** daß auf einer Seite der Nabe (30, 130) im Bereich des Flansches (27, 127) eine zentrale Ausnehmung (140) vorgesehen ist, und daß an der Außenseite eines kreisförmigen Umfangsrandes der zentralen Ausnehmung (140) eine Kontaktfläche zwischen dem Flansch und der Nabe senkrecht auf der Achse der Antriebswelle (103) steht.

9. Hinterradstützeinrichtung nach Anspruch 5 oder 6, **dadurch gekennzeichnet,** daß der Abstandshalter (37) ein abgeschrägtes Ende mit einer äußeren schrägen Fläche (37a) besitzt, die mit einer inneren abgeschrägten Fläche (30a) der Nabe in Wirkverbindung steht, und daß im abgeschrägten Ende Schlitze (39) vorgesehen sind.

## Revendications

1. Dispositif de support de roue arrière pour une motocyclette, comprenant un bras oscillant (1) présentant une extrémité antérieure reliée, à pivotement, à un cadre principal de la motocyclette, et une extrémité postérieure supportant un arbre d'entraînement (3, 103) auquel est assujetti un organe (5) de transmission de puissance, ledit arbre présentant une extrémité (28) insérée coaxialement à travers le moyeu (30, 130) d'une roue arrière (4) et pourvue d'une zone (35, 135) à filetage externe qui fait saillie au-delà dudit moyeu, un écrou d'essieu (38, 138) étant vissé sur ladite zone filetée, afin de fixer la roue arrière à l'arbre d'entraînement,

caractérisé par le fait que ledit arbre d'entraînement (3, 103) comprend un arbre creux extérieur (13, 113) et un arbre intérieur (14, 114) présentant un diamètre plus petit que celui de l'arbre extérieur, et inséré dans cet arbre extérieur, l'organe (5) de transmission de puissance étant assujetti à l'arbre extérieur (13, 113), et la zone (35, 135) à filetage externe étant ménagée sur l'arbre intérieur (14, 114).

**2.** Dispositif de support de roue arrière, selon la revendication 1, caractérisé par le fait que ledit arbre extérieur (13, 113) s'étend à travers l'extrémité postérieure dudit bras oscillant (1), ledit organe (5) de transmission de puissance étant assujetti à l'une des extrémités de l'arbre extérieur faisant saillie au-delà de l'extrémité postérieure dudit bras oscillant, sur un côté opposé à la roue arrière (4).

**3.** Dispositif de support de roue arrière, selon l'une des revendications 1 ou 2, caractérisé par le fait que ledit arbre extérieur (13, 113) est supporté à rotation dans ledit bras oscillant (1), par l'intermédiaire de paliers (25, 26), un collet intérieur circulaire (20) étant ménagé, dans ledit arbre extérieur, à un emplacement proche de l'un (26) desdits paliers, éloigné de la roue arrière par rapport à l'autre palier (25), et ledit arbre intérieur (14, 114) étant assujetti au collet intérieur circulaire (20).

**4.** Dispositif de support de roue arrière, selon l'une quelconque des revendications 1 à 3, caractérisé par le fait que le diamètre dudit arbre extérieur (13, 113) augmente de l'une des extrémités, portant l'organe (5) de transmission de puissance, en direction de l'autre extrémité (28) portant la roue arrière (4), le moyeu (30, 130) de la roue arrière étant ajusté sur ladite autre extrémité de l'arbre extérieur.

**5.** Dispositif de support de roue arrière, selon l'une quelconque des revendications 1 à 4, caractérisé par le fait que ledit arbre extérieur (13, 113) présente une collerette (27, 127) appliquée contre le moyeu (30, 130) de la roue arrière, un organe d'espacement (37, 137) étant prévu entre le moyeu de la roue arrière et l'écrou d'essieu pour appliquer, au moyeu de la roue arrière, une force d'assujettissement dudit écrou d'essieu (38, 138).

**6.** Dispositif de support de roue arrière, selon la revendication 5, caractérisé par le fait que des broches (33, 133) sont assujetties à ladite collerette (27, 127), et sont logées dans des alésages (32, 132) pratiqués dans le moyeu (30, 130).

**7.** Dispositif de support de roue arrière, selon l'une des revendications 5 ou 6, caractérisé par le fait qu'une surface de contact, entre ledit organe d'espacement (24) et le moyeu (130) de la roue arrière, est perpendiculaire à l'axe de l'arbre d'entraînement (103).

**8.** Dispositif de support de roue arrière, selon la revendication 7, caractérisé par le fait qu'un évidement central (140) est ménagé sur le côté du moyeu (30, 130) adjacent à la collerette (27, 127), une surface de contact entre ladite collerette et ledit moyeu s'étendant perpendiculairement à l'axe de l'arbre d'entraînement (103), à l'extérieur d'un bord périphérique circulaire dudit évidement central (140).

**9.** Dispositif de support de roue arrière, selon l'une des revendications 5 ou 6, caractérisé par le fait que l'organe d'espacement (37) possède une extrémité tronconique pourvue d'une surface tronconique extérieure (37a) conçue pour venir s'appliquer contre une surface tronconique intérieure (30a) du moyeu, et des encoches (39) sont pratiquées dans ladite extrémité tronconique.

# FIG. 1

EP 0 288 370 B1

# FIG. 2

EP 0 288 370 B1

# FIG. 3

28(13)

39
39
37a    37

# FIG. 4

30
30a    37a
39
C
13    38
35
14    37

# FIG. 5